# FASCICULE DE BREVET EUROPEEN

(11) **EP 0 585 190 B1**
(45) Date de publication et mention de la délivrance du brevet: **23.09.1998**
(21) Numéro de dépôt: 93470018.8
(22) Date de dépôt: 17.08.1993
(51) Int. Cl.: C21B 13/00

(54) **Installation de réduction du minerai de fer utilisant un lit fluidisé circulant**
Vorrichtung zur Reduktion von Eisenerzen in einer Zirkulierenden Schwebeschicht
Apparatus for the reduction of iron ores in a circulating fluidized bed

(30) Priorité: 25.08.1992 FR 9210340
(43) Date de publication de la demande: 02.03.1994
(73) Titulaire: SOLLAC S.A., 92800 Puteaux (FR)
(72) Inventeur: Delebarre, Arnaud, F-59110 La Madeleine (FR); de Lassat de Pressigny, Yann, F-57070 Metz (FR)
(74) Mandataire: Ventavoli, Roger

(56) Documents cités:
- EP-A- 0 255 180
- FR-A- 1 461 798
- US-A- 4 084 958
- PATENT ABSTRACTS OF JAPAN vol. 7, no. 34 (C-150)(1179) 10 Février 1983 & JP-A-57 188 607 (KAWASAKI SEITESU) 19 Novembre 1982

## Description

L'invention concerne le domaine de la réduction du minerai de fer dans des installations fonctionnant avec un lit fluidisé circulant de minerai.

Actuellement, des recherches sont activement conduites afin de mettre au point des procédés sidérurgiques qui pourraient se substituer au haut fourneau. Les inconvénients du haut fourneau que de tels procédés visent à éliminer seraient son manque de souplesse de fonctionnement, et la nécessité de lui associer une cokerie et une installation d'agglomération du minerai de fer. Par ailleurs, il faudrait que les nouveaux procédés conservent les excellentes performances énergétiques du haut fourneau.

Ces nouveaux procédés sont souvent désignés par le terme : procédés de "fusion réduction" ou "smelting reduction". Une famille de ces procédés associe deux réacteurs. L'un de ces réacteurs produit à partir de minerai de fer du minerai très fortement réduit à l'état métallique, qui est enfourné dans le deuxième réacteur pour être transformé en fonte liquide. Les circuits gazeux de ces deux réacteurs peuvent être liés l'un à l'autre, ou être totalement indépendants.

Des formes de réalisation particulières d'un tel procédé sont décrites par exemple dans l'article "Reduction of fine ore in the circulating fluid bed as the initial stage in smelting reduction (Metallurgical Plant and Technology International, mars 1991, pp 28-32), dans EP-A-2 55 180 et dans la Demande de Brevet FR-A-2 683 829. La réaction de réduction du minerai de fer s'effectue en faisant réagir un lit fluidisé circulant, formé par des particules de minerai en cours de réduction et de charbon transformé en semi-coke, avec un gaz réducteur (mélange CO/CO₂/H₂/H₂O) qui assure également la fluidisation. Celle-ci a lieu dans une première partie du réacteur, dite "réacteur de préréduction". Les gaz chargés en particules de minerai en cours de réduction et de semi-coke passent ensuite dans un cyclone. Les gaz s'échappent alors du réacteur, tandis que les particules descendent dans un gazéifieur, où sont introduits du charbon en excès et de l'oxygène dans le but de former du CO et de l'hydrogène qui vont contribuer à la réduction du minerai. L'excès de charbon est transformé en semi-coke. Les matières solides et les gaz reviennent ensuite dans le réacteur de préréduction. Du minerai neuf est introduit dans le courant de matières, de préférence entre le cyclone et le gazéifieur. Les gaz qui se sont échappés du cyclone sont épurés et réintroduits à la base du réacteur de préréduction et aussi éventuellement à la base du gazéifieur, où ils peuvent rejouer leur rôle de milieu fluidisant et réactionnel.

La configuration qui vient d'être décrite, dans laquelle la totalité des matières, solides et gazeuses, sortant du gazéifieur est transférée dans le réacteur de préréduction, présente un certain nombre d'inconvénients. Ceux-ci sont dus au mélange des gaz provenant du gazéifieur aux gaz circulant dans le réacteur de préréduction. D'une part, ce mélange conduit à un débit de gaz circulant dans la partie supérieure du réacteur de préréduction sensiblement supérieur à ce qu'il est dans la partie inférieure de ce même réacteur. Comme il faut maintenir une vitesse de circulation des matières aussi homogène que possible dans le réacteur pour bien réaliser la fluidisation des matières solides, on doit prévoir un élargissement du réacteur dans sa partie supérieure, ce qui complique sa construction. Surtout, le gaz issu du gazéifieur a déjà commencé à réduire le minerai de fer qu'il contribue à véhiculer, en particulier le minerai neuf introduit entre le cyclone et le gazéifieur. C'est donc un gaz déjà notablement oxydé qui pénètre dans la partie haute du réacteur de préréduction, où il se mélange avec les gaz qui ont poursuivi la réduction du minerai dans la partie basse de ce même réacteur. Ce gaz oxydé ne peut donc guère contribuer à achever la réduction du minerai dans la partie haute du réacteur, et peut même diminuer l'efficacité de cette réaction si son degré d'oxydation est supérieur à celui des gaz issus de la partie basse. Cet effet nuisible peut encore être aggravé si la gazéification partielle du charbon délivre un gaz relativement oxydé ne permettant pas de produire de fer métallique.

Le but de l'invention est de garantir un fonctionnement régulier et efficace du réacteur de préréduction sur toute sa hauteur tout en simplifiant sa conception.

A cet effet, l'invention a pour objet une installation de réduction du minerai de fer, du type comportant :
- un réacteur de préréduction contenant un lit de particules de minerai de fer en cours de réduction et de semi-coke, pourvu de moyens pour fluidiser et mettre en circulation ledit minerai et ledit semi-coke, et comportant des moyens d'injection d'un gaz réducteur contenant du CO et de l'hydrogène dans ledit réacteur de préréduction ;
- des moyens de séparation gaz-particules reliés audit réacteur de préréduction par une conduite, assurant la séparation entre les gaz réducteurs contenant du CO et de l'hydrogène issus dudit réacteur de préréduction et les particules qu'ils ont entraînées, et l'évacuation desdits gaz réducteurs ;
- des moyens de mélange de minerai neuf auxdites particules ;
- un gazéifieur recueillant lesdites particules sous forme d'un lit fluidisé, pourvu de moyens de production de CO et d'hydrogène à partir de matières hydrocarbonées et d'oxygène, et de moyens pour envoyer lesdites particules dans ledit réacteur de préréduction ;
- des moyens d'extraction du minerai en cours de réduction et du semi-coke à partir dudit réacteur de préréduction ;
installation caractérisée en ce qu'elle comporte également une conduite amenant le gaz ayant circulé dans le gazéifieur dans ladite conduite reliant le réacteur de préréduction aux moyens de séparation.

Comme on l'aura compris, l'invention consiste à séparer les particules solides (minerai en cours de réduction, fer métallique et semi-coke) et les gaz réducteurs déjà partiellement oxydés, à l'issue de leur passage dans le gazéifieur. Les particules solides sont envoyées dans le réacteur de préréduction, alors que les gaz sont réinjectés dans l'installation en aval du réacteur de préréduction et en amont des moyens de séparation gaz-particules.

L'invention sera mieux comprise à la lecture de la description qui suit et fait référence aux figures annexées, qui schématisent des exemples d'installations selon l'invention :
- la figure 1 qui montre une installation dans laquelle les particules solides forment un lit fluidisé dense dans le gazéifieur ;
- la figure 2 qui montre une installation dans laquelle les particules solides forment un lit fluidisé circulant dans le gazéifieur.

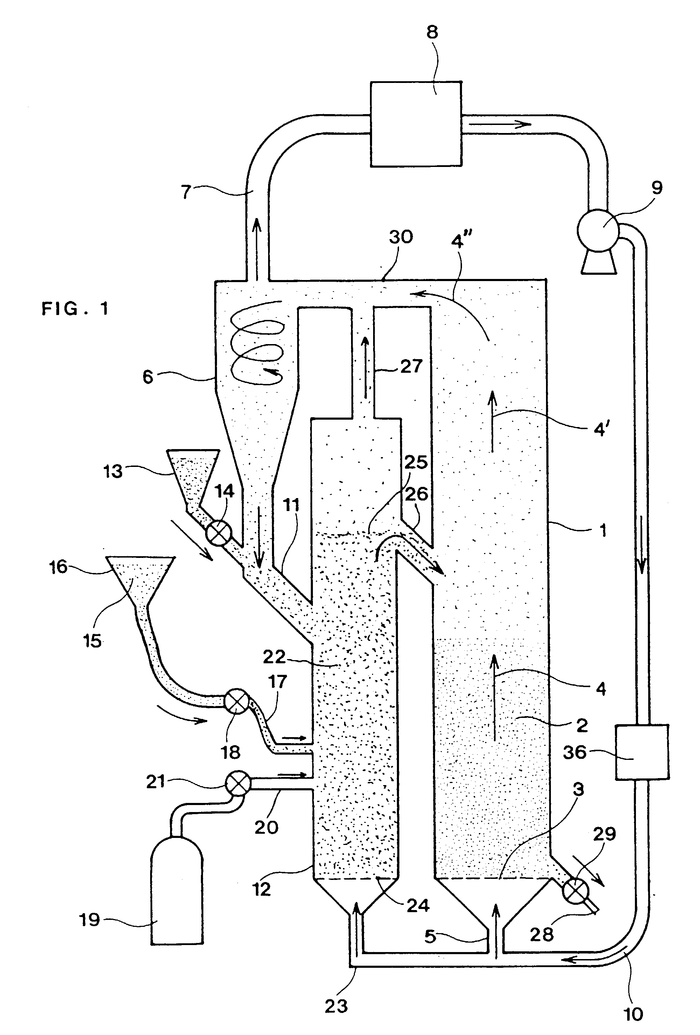

La figure 1 montre une installation de réduction du minerai de fer composée essentiellement de trois parties. Un réacteur de préréduction 1 contient à sa base un lit 2 de particules solides relativement dense, contenant essentiellement du minerai de fer se trouvant pour sa plus grande partie à l'état réduit, mélangé à du semi-coke. Ce lit 2 repose sur un support 3 perméable aux gaz. Le lit 2 est traversé par un courant gazeux de fluidisation qui le met en circulation à travers l'installation, comme indiqué par les flèches 4, 4', 4''. Ce gaz de fluidisation est un gaz réducteur, à savoir un mélange CO/CO₂/H₂/H₂0 qui est injecté à la base du réacteur 1 par une conduite 5. Il se déplace à une vitesse de l'ordre de 2 à 10 m/s. Au cours de leur cheminement dans le réacteur 1, les particules de minerai de fer initialement à l'état naturel oxydé subissent une réduction en fer métallique par le CO et l'hydrogène des gaz de fluidisation. Les gaz et les particules solides s'échappent du réacteur de préréduction 1 par une conduite 30 et pénètrent ensuite dans un cyclone 6, dans lequel ils sont séparés les uns des autres. Les gaz sont évacués du cyclone par une conduite 7, alors que les particules solides retombent dans la partie inférieure du cyclone 6. Les gaz sont épurés du CO₂ et de la vapeur d'eau qu'ils contiennent dans un réacteur approprié 8 d'un type connu en lui-même, sont renvoyés par des moyens adaptés symbolisés par la pompe 9 et la conduite 10 vers la base du réacteur 1, après être passés par un préchauffeur 36, et sont à nouveau utilisés pour la fluidisation et la réduction du minerai. Les particules solides sortant du cyclone 6 sont amenées par une conduite 11 vers un réacteur de gazéification ou gazéifieur 12. Sur cette conduite 11 est connectée une trémie 13 contenant du minerai neuf à réduire, dont l'admission dans l'installation est commandée par la vanne 14.

Le gazéifieur 12 a pour fonctions de générer le gaz servant à la fluidisation et à la circulation des particules, et de fournir l'énergie nécessaire à l'équilibre du bilan thermique. A cet effet, on y réalise des injections d'oxygène et de matières carbonées, telles que du charbon, ces matières carbonées étant en excès. On forme ainsi du CO et de l'hydrogène (avec un certaine proportion de CO₂ et de vapeur d'eau) qui vont réagir avec le minerai pour le réduire en fer et s'oxyder eux-mêmes en CO₂ et vapeur d'eau, alors que le charbon en excès se transforme en semi-coke. La température des gaz est de l'ordre de 950°C, et la proportion de CO₂ et de vapeur d'eau qu'ils contiennent est d'environ 30 à 40 %.

Les matières carbonées 15 contenues dans une trémie 16, sont introduites dans le gazéifieur 12 par une conduite 17, et leur admission est commandée par une vanne 18. L'oxygène, contenu dans un réservoir 19, est de même insufflé dans le gazéifieur 2 par une conduite 20, et son admission est commandée par une vanne 21. Dans cette forme de réalisation, le CO est créé par réaction des matières carbonées avec l'oxygène à l'intérieur du gazéifieur 12. On peut également, comme proposé dans la demande FR-A-2 683 829 déjà citée, former le CO et l'hydrogène dans un brûleur en amont duquel les conduites 17 et 20 se rejoignent, donc avant que les matières carbonées et l'oxygène ne pénètrent dans le gazéifieur 12. Cette dernière configuration permet d'éviter la réoxydation dans le gazéifieur 12 de particules de fer au contact de l'oxygène non encore combiné au carbone.

L'introduction dans le gazéifieur 12 des diverses particules solides et la formation des gaz a pour effet que dans la partie inférieure du gazéifieur 12 se forme un lit fluidisé 22 de particules solides que l'on maintient dans un état relativement dense. Optionnellement, la fluidisation des particules est également assurée par des gaz provenant d'une conduite 23, dérivée de la conduite 10, et débouchant dans le fond du gazéifieur 12. Un grille 24 perméable aux gaz retient alors la partie inférieure de ce lit 22.

Ce lit 22 de particules solides comprend du minerai en cours de réduction, une fraction de fer métallique correspondant au minerai déjà réduit et du semi-coke. Ils proviennent des réactions entre le minerai, les matières carbonées, l'oxygène introduit et les gaz résultant des réactions entre les matières carbonées et l'oxygène, puis entre les particules solides et les gaz (CO, CO₂, H₂,H₂0) nouvellement formés. Les paramètres de fonctionnement du gazéifieur 12 sont calculés de telle manière que la "surface libre" 25 du lit fluidisé 22 arrive au moins au niveau d'une conduite 26 qui fait communiquer le gazéifieur 12 et la partie inférieure du réacteur de préréduction 1. Ainsi, en permanence, par débordement, des particules solides 22 passent du gazéifieur 12 au réacteur de préréduction 1, ce qui assure une circulation permanente de particules solides à l'intérieur de l'ensemble de l'installation. Parallèlement à cela, les gaz formés dans le gazéifieur 12 et ceux éventuellement injectés à sa base s'échappent du gazéifieur 12 par une conduite 27. Celle-ci part du sommet du gazéifieur 12 et parvient dans le circuit de circulation des particules, en un point situé sur la conduite 30, soit entre le réacteur de préréduction 1 et le cyclone 6. Ces gaz n'entraînent avec eux qu'une quantité résiduelle de particules solides.

Les particules solides produites par l'installation, soit du minerai réduit à 75 % au moins et du semi-coke, sont recueillies à la base du réacteur de préréduction 1 par une conduite 28, munie d'une vanne 29. Elles sont alors prêtes à être introduites dans un réacteur de fusion, où sera produite la fonte liquide.

Comme on l'a dit, l'avantage de cette configuration, par rapport à la configuration classique, où les particules solides et les gaz passent ensemble du gazéifieur au réacteur de préréduction, est que les gaz déjà passablement oxydés sortant du gazéifieur 12 ne vont pas se mélanger aux gaz circulant dans le réacteur de préréduction 1. Ceux-ci sont généralement moins oxydés que les gaz issus du gazéifieur 12, et peuvent ainsi poursuivre la réaction de réduction du minerai jusque dans la partie supérieure du réacteur de préréduction, sans crainte de voir leurs possibilités réductrices dégradées par les gaz issus du gazéifieur 12. D'autre part, le débit des gaz transportés étant constant sur toute la hauteur du réacteur de préréduction, il est possible de donner à celui-ci une forme sensiblement cylindrique tout en y conservant une vitesse des gaz constante.

Dans cette configuration, l'essentiel des transferts thermiques entre le gazéifieur 12 et le réacteur de préréduction 1 est effectué par les particules solides qui passent de l'un à l'autre, et cela s'avère suffisant, conjugué à l'action du préchauffeur 36, pour faire fonctionner convenablement le réacteur de préréduction 1.

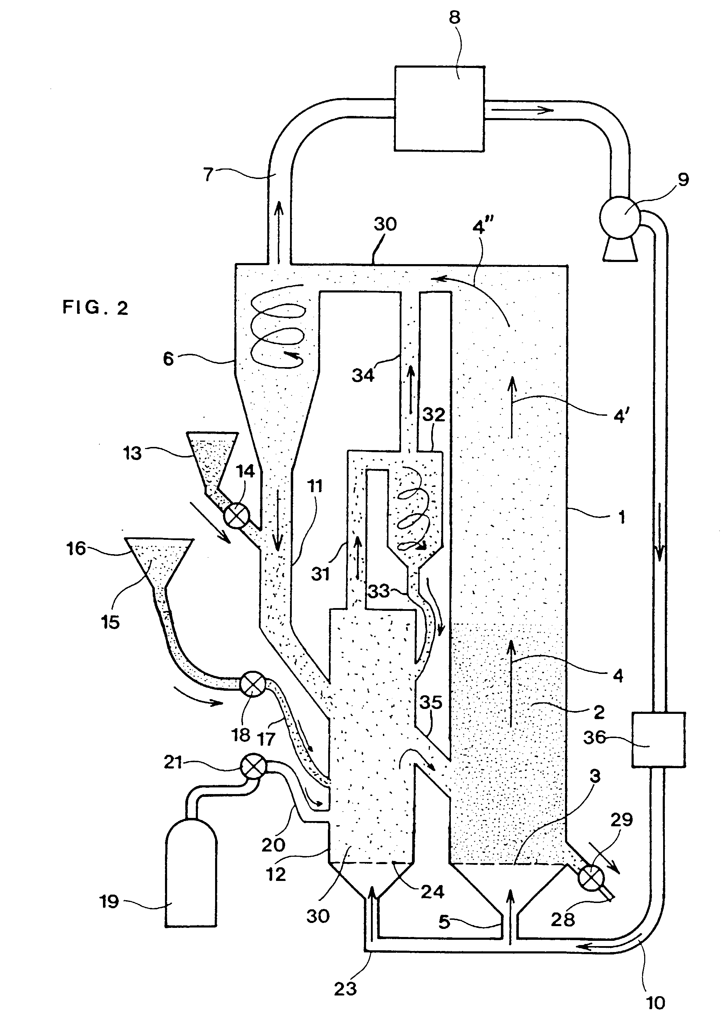

Sur la figure 2 est représentée une autre variante de l'invention, dans laquelle les particules solides transitant par le gazéifieur 12 sont mises non plus sous la forme d'un lit fluidisé dense, mais d'un lit fluidisé circulant 30. Une conduite 31 amène ces particules solides et les gaz qui les transportent dans un deuxième cyclone 32 qui assure leur séparation. Une conduite 33 ramène les particules solides recueillies à la base dudit deuxième cyclone 32 dans le gazéifieur 12. D'autre part une conduite 34 relie la partie supérieure du deuxième cyclone 32 à la conduite 30 reliant le réacteur de préréduction 1 au premier cyclone 6. Elle remplit la même fonction que la conduite 27 de la figure 1, à savoir amener les gaz oxydés ayant circulé dans le gazéifieur 12 en aval du réacteur de préréduction 1 pour éviter leur mélange avec les gaz moins oxydés circulant dans le réacteur de préréduction. Enfin une conduite 35 assure le transfert des particules solides du gazéifieur 12 dans le réacteur de préréduction 1 (les organes de la variante représentée sur la figure 1 qui se retrouvent sur la variante de la figure 2 y sont référencés par les mêmes repères).

Bien entendu, sans sortir de l'esprit de l'invention, des modifications peuvent être apportées aux installations telles qu'elles viennent d'être décrites. En particulier, l'apport de gaz contenant du CO et de l'hydrogène à la base du réacteur de préréduction 1 et du réacteur de gazéification 12 peut avoir d'autres origines que les gaz s'échappant du cyclone 6. Ils peuvent, par exemple, provenir d'un réacteur assurant la fusion et la réduction complète du minerai réduit et sa transformation en fonte. De même, l'addition de minerai neuf aux particules circulant dans l'installation peut être effectuée à tout endroit approprié, et pas forcément entre le premier cyclone et le gazéifieur. Enfin, les cyclones peuvent être remplacés par tout autre moyen approprié de séparation des-gaz et des particules.

## Revendications

1. Installation de réduction du minerai de fer, du type comportant :
- un réacteur de préréduction (1) contenant un lit de particules de minerai de fer en cours de réduction et de semi-coke, pourvu de moyens pour fluidiser et mettre en circulation ledit minerai et ledit semi-coke, et comportant des moyens d'injection d'un gaz réducteur contenant du CO et de l'hydrogène dans ledit réacteur de préréduction (1) ;
- des moyens de séparation gaz-particules (6) reliés audit réacteur de préréduction par une conduite (30), assurant la séparation entre les gaz réducteurs contenant du CO et de l'hydrogène issus dudit réacteur de préréduction (1) et les particules qu'ils ont entraînées, et l'évacuation desdits gaz réducteurs ;
- des moyens (11,13) de mélange de minerai neuf auxdites particules ;
- un gazéificateur (12) recueillant lesdites particules sous forme d'un lit fluidisé, pourvu de moyens de production de CO et d'hydrogène à partir de matières hydrocarbonées et d'oxygène, et de moyens pour envoyer lesdites particules dans ledit réacteur de préréduction (1) ;
- des moyens (28, 29) d'extraction du minerai en cours de réduction et du semi-coke à partir dudit réacteur de préréduction (1) ;
installation caractérisée en ce qu'elle comprend également une conduite (27, 34) amenant le gaz ayant circulé dans le gazéifieur (12) dans ladite conduite (30) reliant le réacteur de préréduction (1) aux moyens de séparation (6).

2. Installation selon la revendication 1, caractérisée en ce que le lit fluidisé de particules dans le gazéifieur (12) est un lit dense (22) possédant une surface libre (25), en ce que les moyens pour envoyer lesdites particules dans ledit réacteur de préréduction (1) sont constitués par une conduite (26) connectée au gazéifieur (12) à un niveau situé en dessous du niveau normal de la surface libre (25) du lit dense (22), et en ce que ladite conduite amenant les gaz formés dans le gazéifieur (12) dans ladite conduite (30) reliant le réacteur de préréduction (1) aux moyens de séparation (6) est une conduite (27) connectée à la partie supérieure du gazéifieur (12)

3. Installation selon la revendication 1, caractérisée en ce que le lit fluidisé dans le gazéifieur (12) est un lit fluidisé circulant (30), et en ce qu'elle comporte également d'autres moyens de séparation (32) entre les gaz et les particules s'échappant du gazéifieur (12) et des moyens (33) pour renvoyer lesdites particules dans le gazéifieur (12), lesdits moyens pour envoyer les particules dudit lit fluidisé circulant (30) dans le réacteur de préréduction (1) étant constitués par une conduite (35) reliant le gazéifieur (12) et le réacteur de préréduction (1), et ladite conduite amenant les gaz ayant circulé dans le gazéifieur (12) dans la conduite (30) reliant le réacteur de préréduction (1) aux moyens de séparation (6) étant une conduite (34) connectée auxdits autres moyens de séparation (32).

4. Installation selon l'une des revendications 1 à 3, caractérisée en ce qu'elle comporte également des moyens (5, 9, 10) pour injecter dans ledit réacteur de préréduction (1) au moins une partie des gaz réducteurs contenant du CO et de l'hydrogène évacués desdits moyens de séparation (6).

5. Installation selon l'une des revendications 1 à 4, caractérisée en ce qu'elle comporte également des moyens (23) pour injecter dans le gazéifieur (12) au moins une partie des gaz réducteurs contenant du CO et de l'hydrogène évacués desdits moyens de séparation (6).

6. Installation selon la revendication 4 ou 5, caractérisée en ce qu'elle comporte également des moyens (8) d'élimination du CO₂ et de la vapeur d'eau des gaz réducteurs contenant du CO et de l'hydrogène évacués desdits moyens de séparation (6).

## Patentansprüche

1. Anlage zur Reduktion von Eisenerz, die aufweist:
- einen Vorreduktionsreaktor (1), der eine Wirbelschicht aus in Reduktion befindlichen Eisenerzpartikeln und Halbkoks enthält, mit Mitteln zur Fluidisation und Umwälzung des Erzes und des Halbkokses versehen ist und Mittel zum Einblasen eines CO- und wasserstoffhaltigen reduzierenden Gases in den Vorreduktionsreaktor (1) aufweist;
- Mittel zur Gas/Partikel-Trennung (6), die durch eine Leitung (30) mit dem Vorreduktionsreaktor verbunden sind und die Trennung der aus dem Vorreduktionsreaktor (1) stammenden CO- und wasserstoffhaltigen reduzierenden Gase und der von ihnen mitgeführten Partikel sowie die Abfuhr dieser reduzierenden Gase gewährleisten;
- Mittel (11, 13) zum Beimischen von neuem Erz zu den Partikeln;
- einen Vergaser (12), der die Partikel in Form einer Wirbelschicht sammelt, mit Mitteln zur Erzeugung von CO und Wasserstoff aus kohlenwasserstoffhaltigen Substanzen und Sauerstoff und mit Mitteln zum Überführen der Partikel in den Vorreduktionsreaktor (1) versehen ist;
- Mittel (28, 29) zur Entnahme des in Reduktion befindlichen Erzes und des Halbkokses aus dem Vorreduktionsreaktor (1);
dadurch gekennzeichnet, daß sie außerdem eine Leitung (27, 34) aufweist, welche das Gas, das in dem Vergaser (12) zirkuliert hat, in die Leitung (30) befördert, die den Vorreduktionsreaktor (1) mit den Trennmitteln (6) verbindet.

2. Anlage nach Anspruch 1, dadurch gekennzeichnet, daß die Wirbelschicht aus Partikeln in dem Vergaser (12) eine dichte Schicht (22) ist, die eine freie Oberfläche (25) besitzt, daß die Mittel zum Überführen der Partikel in den Vorreduktionsreaktor (1) aus einer Leitung (26) bestehen, die in einer Höhe, welche sich unterhalb des Normalpegels der freien Oberfläche (25) der dichten Schicht (22) befindet, an dem Vergaser (12) angeschlossen ist, und daß die Leitung, welche die in dem Vergaser (12) gebildeten Gase in die Leitung (30) befördert, die den Vorreduktionsreaktor (1) mit den Trennmitteln (6) verbindet, eine Leitung (27) ist, die an dem oberen Teil des Vergasers (12) angeschlossen ist.

3. Anlage nach Anspruch 1, dadurch gekennzeichnet, daß die Wirbelschicht in dem Vergaser (12) eine zirkulierende Wirbelschicht (30) ist, daß sie außerdem weitere Mittel zur Trennung (32) der aus dem Vergaser (12) entweichenden Gase und Partikel sowie Mittel (33) zur Rückführung dieser Partikel in den Vergaser (12) aufweist, wobei die Mittel zum Überführen der Partikel der zirkulierenden Wirbelschicht (30) in den Vorreduktionsreaktor (1) aus einer Leitung (35) bestehen, die den Vergaser (12) und den Vorreduktionsreaktor (1) verbindet, und die Leitung, welche die Gase, die in dem Vergaser (12) zirkuliert haben, in die Leitung (30) befördert, die den Vorreduktionsreaktor (1) mit den Trennmitteln (6) verbindet, eine Leitung (34) ist, die an den weiteren Trennmitteln (32) angeschlossen ist.

4. Anlage nach einem der Ansprüche 1 bis 3, dadurch gekennzeichnet, daß sie außerdem Mittel (5, 9, 10) aufweist, um wenigstens einen Teil der CO- und wasserstoffhaltigen reduzierenden Gase, die aus den Trennmitteln (6) abgeführt wurden, in den Vorreduktionsreaktor (1) einzublasen.

5. Anlage nach einem der Ansprüche 1 bis 4, dadurch gekennzeichnet, daß sie außerdem Mittel (23) aufweist, um wenigstens einen Teil der CO- und wasserstoffhaltigen reduzierenden Gase, die aus den Trennmitteln (6) abgeführt wurden, in den Vergaser (12) einzublasen.

6. Anlage nach Anspruch 4 oder 5, dadurch gekennzeichnet, daß sie außerdem Mittel (8) zur Entfernung des CO₂ und des Wasserdampfes aus den CO- und wasserstoffhaltigen reduzierenden Gasen, die aus den Trennmitteln (6) abgeführt wurden, aufweist.

## Claims

1. Plant for the reduction of iron ore, of the type comprising:
- a prereduction reactor (1) containing a bed of particles of iron ore being reduced and of semi-coke, provided with means for fluidizing and for circulating the said ore and the said semi-coke, and including means for injecting a reducing gas containing CO and hydrogen into the said prereduction reactor (1);
- gas/particle separation means (6) connected to the said prereduction reactor by a pipe (30), ensuring separation of the reducing gases containing CO and hydrogen which come from the said prereduction reactor (1) from the particles that they have entrained, and the removal of the said reducing gases;
- means (11, 13) for mixing fresh ore with the said particles;
- a gasifier (12) collecting the said particles in the form of a fluidized bed, the gasifier being provided with means for producing CO and hydrogen, from carbonaceous materials and from oxygen, and with means for sending the said particles into the said prereduction reactor (1);
- means (28, 29) for extracting the ore being reduced and the semi-coke from the said prereduction reactor (1);
which plant is characterized in that it also comprises a pipe (27, 34) taking the gas which has circulated in the gasifier (12) into the said pipe (30) connecting the prereduction reactor (1) to the separation means (6).

2. Plant according to Claim 1, characterized in that the fluidized bed of particles in the gasifier (12) is a dense bed (22) having a free surface (25), in that the means for sending the said particles into the said prereduction reactor (1) consist of a pipe (26) connected to the gasifier (12) at a level lying below the normal level of the free surface (25) of the dense bed (22) and in that the said pipe taking the gases formed in the gasifier (12) into the said pipe (30) connecting the prereduction reactor (1) to the separation means (6) is a pipe (27) connected to the top of the gasifier (12).

3. Plant according to Claim 1, characterized in that the fluidized bed in the gasifier (12) is a circulating fluidized bed (30) and in that the plant also includes other means (32) for separating the gases from the particles escaping from the gasifier (12) and means (33) for sending the said particles back into the gasifier (12), the said means for sending the particles from the said circulating fluidized bed (30) into the prereduction reactor (1) consisting of a pipe (35) connecting the gasifier (12) to the prereduction reactor (1), and the said pipe taking the gases which have circulated in the gasifier (12) into the pipe (30) connecting the prereduction reactor (1) to the separation means (6) being a pipe (34) connected to the said other separation means (32).

4. Plant according to one of Claims 1 to 3, characterized in that it also includes means (5, 9, 10) for injecting, into the said prereduction reactor (1), at least some of the reducing gases containing CO and hydrogen which are removed from the said separation means (6).

5. Plant according to one of Claims 1 to 4, characterized in that it also includes means (23) for injecting, into the gasifier (12), at least some of the reducing gases containing CO and hydrogen which are removed from the said separation means (6).

6. Plant according to Claim 4 or 5, characterized in that it also includes means (8) for removing the CO₂ and the water vapour from the reducing gases containing CO and hydrogen which are removed from the said separation means (6).
